# EUROPEAN PATENT APPLICATION

(11) **EP 4 144 224 A1**
(43) Date of publication of application: **08.03.2023**
(21) Application number: 21194872.4
(22) Date of filing: 03.09.2021
(51) Int. Cl.: A23F 5/14, A23F 5/46

(54) **PROCESS FOR COATING COFFEE BEANS**

(71) Applicant: AAA Accelerator Group Europe AG, 6317 Oberwil b. Zug (CH)
(72) Inventor: TITZ, Peter Josef Johannes, 6317 Oberwil bei Zug (CH)
(74) Representative: Wallinger, Michael

(57) **Abstract**

This invention relates to a novel process for coating coffee beans with non-coffee-based compositions, to coated coffee beans, the coffee powder obtained by grinding such coated coffee beans, and to a method of brewing coffee from such coffee powder.

## Description

### FIELD OF THE INVENTION

This invention relates to a novel process for coating coffee beans with non-coffee-based compositions, to coated coffee beans, the coffee powder obtained by grinding such coated coffee beans, and to a method of brewing coffee from such coffee powder.

### BACKGROUND OF THE INVENTION

The drinking of coffee is known since more than 1,000 years (Rattan et al., J Food Sci Technol 52 (2015) 5470-5483), and over time coffee has become a highly important economic factor for producing countries, the players involved in processing and commercializing coffee-based products, and the end-users.

According to data provided by the International Coffee Organization (ICO), an intergovernmental organization established under the auspices of the United Nations, the total production by all exporting countries has increased in total by 77 % from the production season 1990/91 to that of 2019/20, and already in 1997 it had been estimated that more than "one hundred million people in developing countries have become dependent on coffee as their primary source of income" (Cousin, Tracey L.; American University, June 1997). In the same time frame, the consumption in major markets (European Union, Japan, Norway, Russian Federation, Switzerland, Tunisia, United Kingdom, and United States of America) has increased by 47 %. Based on data published by Statista, Hamburg, Germany, the total revenues in the worldwide coffee market are expected to be 386.646 Mio Euro in 2021 and to increase to 531.596 Mio Euro in 2025.

While the coffee market was dominated for a long time just by the different species of Coffea plants, different blends and roasts, the coffee market has become more and more diversified in recent years, from decaffeinated products to, for example, flavored products and coffee-based mixtures.

Kaffee Partner GmbH (Osnabrück, Germany) regularly publishes internet-based magazines and articles describing novel trends in the coffee market. The 2019 coffee trends included, for example, mixtures of coffee and tea (Coff-Tea), coffee mixture including eggs, cold brews, including the so-called "Nitro Coffee" created by using nitrogen gas for generating a smooth texture, mixtures with lemonades, and mushroom coffee. The coffee trends mentioned in the 2021 report included, for example, a cold brew with tonic water, mixtures of coffee with kombucha ("Coffbucha"), and a mixture of coffee and maca root powder.

Some of the approaches mentioned above, such as the combination with maca root powder, the combination of coffee with Reishi mushrooms, or combinations with curcuma or coconut oil are regarded as a being part of a trend to combine coffee with so-called "superfoods", i. e. food products with potential health- and/or wellness-enhancing properties.

Similarly, coffee mixtures are being offered that contain cannabidiol (CBD), in particular hemp-derived CBD that is essentially free of tetrahydrocannabinol, since CBD is discussed as having therapeutic activity, in particular anxiolytic, antipsychotic and neuroprotective properties (see, for example, Crippa, J. A. et al., Front. Immunol. 9:2009. doi: 10.3389/fimmu.2018.02009).

Another trend is to create products that are of interest to the customers because of their visual appearance, in particular including colored coffee-based products. Examples include, for example, "Red Velvet Latte", a mixture comprising coffee, milk and beetroot juice.

In that context, phycobili proteins, such as phycocyanin (C-PC), and algae products containing such proteins have gained a particular interest, since they not only result in deeply colored products, in particular deeply green-blue- to blue-colored products, but are additionally discussed as having a potential activity in the treatment of cancer, inflammatory diseases, certain autoimmune diseases as well as in the prevention of angiogenesis.

As a consequence, algae powder-containing products have already been commercialized since a couple of years. While the so-called "Smurf Latte" did not contain coffee, but just coconut milk, blue algae powder and some taste-improving components, the addition of algae powder to coffee has been reported since at least 2018.

A disadvantage of the phycobili proteins, however, is their low thermal stability.

Recently, coffee capsules comprising algae powder as additional component have been commercially offered by Algatek S. L, Asturias, Spain, under the trademark "Kafelina". The problem of the low thermal stability is addressed by a particular arrangement of the layers within the capsules that help to ensure that the beverage or beverage component based on that additional component can leave the capsule relatively quickly, in particular during the first period during which the temperature of the liquid supplied into the capsule is lower than during the second period (EP 3 868 687).

However, while it is of course possible to simply mix ground coffee powder with algae powder (or other components in powder form) in the desired ratio and brewing a mixed coffee drink from such powder mixture, such mixture would not offer any protection against heat during treatment with hot water as part of the brewing process. Additionally, the required mixing step, either before or after brewing, is less convenient, in particular since coffee should ideally be brewed immediately after grinding, and be consumed as soon as possible after the brewing step, since many of the aroma components of coffee are either volatile or unstable and get rapidly lost.

Therefore, there was the need for identifying a more convenient approach for ultimately generating coffee-based mixtures comprising additional components, and in particular for generating such mixtures with temperature-sensitive components.

The solution to this problem, i. e. the use of, for example, shellac as a coating material, and the successful identification of a coating process working at low temperatures, has hitherto neither been shown nor suggested in the prior art.

### SUMMARY OF THE INVENTION

This invention relates to a method for coating roasted coffee beans with a non-coffee based composition by using a pre-coating solution.

Thus, in a first aspect, the present invention relates to a process for the coating of roasted coffee beans with a non-coffee-based composition, comprising the steps of:
a) treating the roasted coffee beans with a pre-coating solution comprising a coating material;
b) adding said non-coffee-based composition to the product of step a); and
c) drying the mixture obtained in step b) at a temperature not to exceed 40°C.

In a second aspect, the present invention relates to roasted coffee beans coated with a coating material comprising a non-coffee-based composition as defined in the present application.

In a third aspect, the present invention relates to a coffee powder comprising at least in part particles consisting of a coffee component and a coating component, wherein said coating component comprises a non-coffee-based composition as defined in the present application.

In a fourth aspect, the present invention relates to a method of generating a coffee comprising a non-coffee-based composition as defined in the present application, comprising the step of brewing coffee from a coffee powder according to the present application. Particular embodiments of the present invention are set forth in the appended dependent claims.

### FIGURES

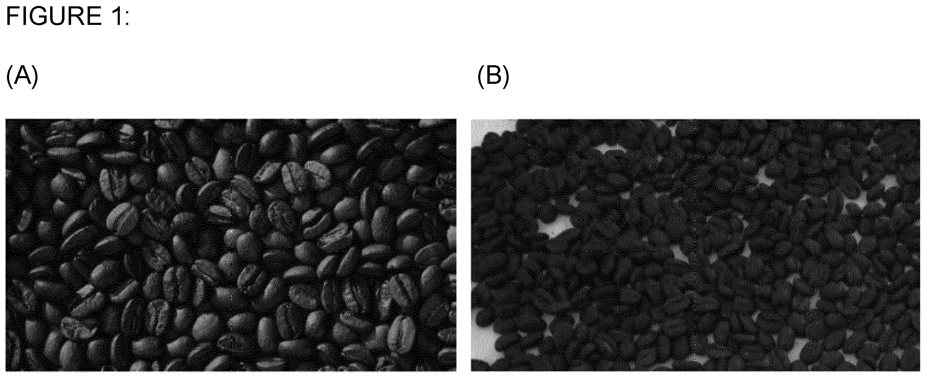

**Figure 1** shows a picture of the beans prior to (A) and after coating (B).

### DETAILED DESCRIPTION OF THE INVENTION

This invention relates to a method for coating roasted coffee beans with a non-coffee based composition by using a pre-coating solution.

Thus, in a first aspect, the present invention relates to a process for the coating of roasted coffee beans with a non-coffee-based composition, comprising the steps of:
a) treating the roasted coffee beans with a pre-coating solution comprising a coating material;
b) adding said non-coffee-based composition to the product of step a); and
c) drying the mixture obtained in step b) at a temperature not to exceed 40°C.

Throughout this specification and the claims which follow, unless the context requires otherwise, the word "comprise", and variations such as "comprises" and "comprising", will be understood to imply the inclusion of a stated integer, composition or step or group of integers or steps, while any additional integer, composition or step or group of integers, compositions or steps may optionally be present as well, including embodiments, where no additional integer, composition or step or group of integers, compositions or steps are present . With respect to such latter embodiments, the term "comprising" thus includes the narrower term "consisting of".

Several documents are cited throughout the text of this specification. Each of the documents cited herein (including all patents, patent applications, scientific publications, manufacturer's specifications, instructions, GenBank Accession Number sequence submissions etc.), whether supra or infra, is hereby incorporated by reference in its entirety to the extent possible under the respective patent law. Nothing herein is to be construed as an admission that the invention is not entitled to antedate such disclosure by virtue of prior invention.

In the context of the present invention, the terms "pre-coating solution" relates to a solution that is added to the roasted coffee beans prior to the addition of said non-coffee-based composition to provide a layer covering the surface of said roasted coffee beans being ready for incorporation of said non-coffee-based composition upon it being added in the next step.

The coating of roasted coffee beans has been performed in the past by applying a thin glaze to the surface of the beans, e. *g.* by using glazing materials such as shellac or by using ethers or other derivatives of cellulose and starch such as methyl cellulose, ethyl cellulose, hydroxyethyl cellulose, methyl starch and ethyl starch as film-forming agents (see US 2,665,992) or by using carboxymethyl cellulose (CMC), hydroxypropylmethyl cellulose (HPMC) or whey protein concentrate (Rattan *et al., loc. cit.)*

In a particular embodiment, step a) is performed by adding said pre-coating solution to coffee beans, after roasting and after cooling said coffee beans, in a food mixer at ambient temperature of between 15°C and 22°C.

In a particular embodiment, said food mixer rotates at 60 to 100 rpm.

In a particular embodiment, said pre-coating solution is an aqueous shellac solution comprising shellac as said coating material.

In the context of the present invention, the term "shellac" refers to of a natural resin produced by the female lac bug (Laccifer lacca or Kerria lacca) in a food-grade form. Shellac is recognized as safe in the "Inactive Ingredients Guide" issued by the FDA in the US, and is an approved food additive according to Annex II of Regulation (EC) No. 1333/2008.

Without wishing to be bound by theory, it is assumed that the low solubility of shellac in neutral and acidic water is exerting a protective influence on the non-coffee-based composition being part of the shellac-based coating against the treatment with hot water during the brewing process.

In a particular embodiment, said aqueous shellac solution is an aqueous solution of ammonium shellacate (CAS No. 68308-35-0).

In a particular embodiment, said aqueous solution has a content of solid material of 25 %.

In particular embodiments, the amount of solid material is calculated based on total weight of the solution (percentage w/w). In other embodiments, the amount of solid material is calculated based on total volume of the solution (percentage w/v).

In a particular embodiment, between 4 and 6 ml of said aqueous shellac solution, in particular 5 ml, are added per 100 g of roasted coffee beans.

In a particular embodiment, the mixture is mixed for between 2 and 4 min, in particular for 3 min, at a temperature not to exceed 26°C.

In a particular embodiment, in step b), between 3 and 5 g of said non-coffee-based composition, in particular 4 g, optionally wherein said 4 g include up to 0.2 g of an aroma composition, are added per 100 g of roasted coffee beans.

In a particular embodiment, said non-coffee-based composition is a composition selected from a coloring composition, CBD powder, maca root powder, mushroom powder, in particular Reishi mushrooms powder, and curcuma, in particular a coloring composition or CBD powder.

In a particular embodiment, said coloring composition is selected from an algae-based coloring composition and a non-algae-based coloring composition.

In a particular embodiment, said coloring composition is an algae-based coloring composition. In such embodiments, said pre-coating solution is an aqueous shellac solution, since experiments with other pre-coating materials have not resulted in satisfactory coatings.

In particular such embodiments, said algae-based coloring composition is a composition selected from an algae powder, in particular a microalgae powder, in particular a Spirulina or a Chlorella powder, more particularly a Spirulina powder, or a protein or pigment composition extracted from algae, in particular an algae phycobili protein composition, in particular a phycocyanin composition.

In the context of the present invention, the term "algae-based coloring composition" refers in general to products derived from an algae, an algae extract of the algae (such as proteins of phycocyanin and/or allophycocyanin and/or phycoerythrin) or algae biomass, such as a marine micro algae, a marine micro algae extract or marine micro algae biomass. In a particular embodiment, the algae product is Spirulina or a product derived therefrom. The term "Spirulina", as used herein, refers to an Arthrospira species, such as the biomass of an Arthrospira species (or a product derived therefrom), particularly the dried biomass of an Arthrospira species. Typically, "Spirulina" refers to the Arthrospira species *Arthrospira platensis.*

In the context of the present invention, the term "phycobili proteins" refers to a group of chromoproteins with a relative molecule mass of between 50,000 and 270000 U, which absorb light in the green and light red spectrum, i.e. at wavelengths between about 500 and 650 nm, and which are present as membrane-associated antenna pigments exclusively in cyanobacteria, rhodophytes (red algae) and cryptophytes. The group of phycobili proteins includes, but is not limited to, phycocyanin (C-PC), allophycocyanin (APC) and phycoerythrin (PE) or mixtures thereof.

In a particular embodiment, the phycobilin protein is a powder obtained as crude raw extract from rhodophytes, cryptophytes or cyanobacteria.

In a particular embodiment, the phycobilin protein is from cyanobacteria.

In particular other embodiments, the phycobilin protein is from rhodophytes. In a particular embodiment, the phycobilin protein is phycocyanin blue powder, a crude raw extract from red algae.

In a particular such embodiment, the phycobilin protein is a mixture of about 55 to 65 % phycocyanin (C-PC), 22 to 30 % allophycocyanin (APC) and 12 to 20 % phycoerythrin (PE), in particular 58 % phycocyanin (C-PC), 26 % allophycocyanin (APC) and 16 % phycoerythrin (PE).

In a particular embodiment, said coloring composition is an non-algae-based coloring composition. In particular such embodiments, said non-algae-based coloring composition is selected from aloe phycocyanin, phycoerythrin, beta-carotene, fucoxanthin, and astaxanthin.

In a particular embodiment, said aroma compositions is present, and wherein said aroma composition provides an aroma selected from caramel, vanilla, lemon, strawberry, lime, cinnamon, nutmeg, ginger, saffron, and orange.

In a particular embodiment, the mixture obtained in said step b) is mixed for between 4 and 6 min, in particular for 5 min.

In a particular embodiment, step c) is performed for between 4 and 6 min, in particular for 5 min.

In a particular embodiment, said step c) is performed at 36°C.

In a particular embodiment, the coated coffee beans are cooled down to ambient temperature after step c).

In a second aspect, the present invention relates to roasted coffee beans coated with a coating material comprising a non-coffee-based composition as defined in the present application.

In a particular embodiment, said coating material is shellac.

In a particular embodiment, the amount of shellac present in the coating is in the range of between 1 and 1.25 g per 100 g of coated roasted coffee beans.

In a particular embodiment, said non-coffee-based composition is selected from a coloring composition, CBD powder, maca root powder, mushroom powder, in particular Reishi mushrooms powder, and curcuma, in particular a coloring composition or CBD powder.

In a particular embodiment, said coloring composition is selected from an algae-based coloring composition and a non-algae-based coloring composition as defined above.

In a particular embodiment, the amount of said non-coffee-based composition is present in the coating in a range of between 3.2 and 3.8 g per 100 g of coated roasted coffee beans.

In a particular embodiment, said coated roasted coffee beans are obtained by a process according to the first aspect of the present invention.

In a third aspect, the present invention relates to a coffee powder comprising at least in part particles consisting of a coffee component and a coating component, wherein said coating component comprises a non-coffee-based composition as defined in the present application.

In a particular embodiment, said coffee powder is obtained by grinding coated roasted coffee beans according to the present invention.

In a fourth aspect, the present invention relates to a method of generating a coffee comprising a non-coffee-based composition as defined in the present application, comprising the step of brewing coffee from a coffee powder according to the present application.

Particular embodiments of the present invention are set forth in the appended dependent claims.

### EXAMPLES

### Example 1: Coating of roasted coffee beans with shellac and Spirulina algae powder

Due to the fact that coffee beans are roasted at temperatures of between about 200°C (light roast) and 245°C (Italian roast), a coating of green coffee beans prior to the roasting step cannot be performed. Thus, non-coffee-based compositions such as Algae powder, its protein and vitamin content as well as any aromas used can only be done after roasting. Due to the sensitivity of such coating materials, a maximum temperature of 40°C must not be exceeded.

The roasted coffee beans were cooled to room temperature and were placed in an industrial food mixer at ambient temperature of between 15°C and 22°C. Once in the food mixer the beans were rotated at 60 to 100 rpm. Five ml of a food grade aqueous shellac solution (SWANLAC ASL 10; A. F. Suter Co. Ltd, United Kingdom) were added per 100 g of coffee beans in the mixer. Pre-coating of the coffee beans with the wet shellac solution was performed for 3 min, while making sure that the temperature was not higher than 26°C. Thereafter, 4 g of algae powder (I.E Spirulina) were added per 100 g of coffee beans. Alternatively, 4 g of protein/pigment isolated from algae, such as crude phycocyanin, can be added instead of algae powder. Optionally, 0.2 g of an aroma powder, such as vanilla or caramel aroma etc, can be added per 100 g of coffee beans. In order to fully coat the coffee beans, the mixture was mixed for 5 min. Thereafter, the mixture was heated by way of blowing hot air into the mixture, while keeping the temperature of the coffee bean mixture at a maximum of 40°C, ideally at a temperature of about 36°C, for an additional 5 min. Thereafter, the coated coffee beans were poured out of the food mixer and allowed to cool down to an ambient temperature prior to packaging the coated beans. At that point, the coated coffee beans have a hard coating and are shiny.

Figure 1 shows a picture of the beans prior to and after coating.

The following Tables 1 and 2 show the analytical results of ground coffee of the non-coated and of the coated coffee beans, respectively.

**Table 1: Analytical results of ground coffee of the non-coated coffee beans:**

| **Analytical parameter** | **Unit** | **Result** |
|---|---|---|
| Caloric value | kJ/100 g | 1150 |
| Caloric value | kcal/100 g | 279 |
| Fat | g/100 g | 4.79 |
| Saturated fatty acids | g/100 g | 2.10 |
| Mono-unsaturated fatty acids | g/100 g | 0.41 |
| Poly-unsaturated fatty acids | g/100 g | 2.30 |
| Carbohydrates | g/100 g | 13.61 |
| Sugars | g/100 g | 1.00 |
| Alimentary fibres | g/100 g | > 12 |
| Proteins | g/100 g | 15.9 |
| Salts | g/100 g | 0.05 |

**Table 2: Analytical results of ground coffee of the coffee beans coated with Spirulina powder:**

| **Analytical parameter** | **Unit** | **Result** |
|---|---|---|
| Caloric value | kJ/100 g | 1237 |
| Caloric value | kcal/100 g | 299 |
| Fat | g/100 g | 6.03 |
| Saturated fatty acids | g/100 g | 2.61 |
| Mono-unsaturated fatty acids | g/100 g | 0.50 |
| Poly-unsaturated fatty acids | g/100 g | 2.91 |
| Carbohydrates | g/100 g | 15.36 |
| Sugars | g/100 g | < 0.5 |
| Alimentary fibres | g/100 g | > 12 |
| Proteins | g/100 g | 19.8 |
| Salts | g/100 g | 0.09 |

## Claims

1. A process for the coating of roasted coffee beans with an algae-based composition, comprising the steps of:
a) treating the roasted coffee beans with an aqueous shellac solution as pre-coating solution;
b) adding said Algae-based composition to the product of step a); and
c) drying the mixture obtained in step b) at a temperature not to exceed 40°C.

2. The process according to claim 1, wherein step a) is performed by adding said aqueous shellac solution to coffee beans, after roasting and after cooling said coffee beans, in a food mixer at ambient temperature of between 15°C and 22°C.

3. The process according to claim 2, wherein said food mixer rotates at 60 to 100 rpm.

4. The process according to any one of claims 1 to 3, wherein said aqueous shellac solution is an aqueous solution of ammonium shellacate (CAS No. 68308-35-0), in particular wherein said aqueous solution has a content of solid material of 25 %.

5. The process according to claim 4, wherein between 4 and 6 ml of said aqueous shellac solution, in particular 5 ml, are added per 100 g of roasted coffee beans.

6. The process according to claim 5, wherein the mixture is mixed for between 2 and 4 min, in particular for 3 min, at a temperature not to exceed 26°C.

7. The process according to any one of claims 1 to 6, wherein in step b), between 3 and 5 g of said algae-based composition, in particular 4 g, optionally wherein said 4 g include up to 0.2 g of an aroma composition, are added per 100 g of roasted coffee beans.

8. The process according to claim 7, wherein said algae-based composition is a composition selected from an algae powder, in particular a microalgae powder, in particular a Spirulina or a Chlorella powder, more particularly a Spirulina powder, or a protein or pigment composition extracted from algae, in particular algae phycocyanin.

9. The process according to claim 7 or 8, wherein said aroma compositions is present, and wherein said aroma composition provides an aroma selected from caramel, vanilla, lemon, strawberry, lime, cinnamon, nutmeg, ginger, saffron, and orange.

10. The process according to any one of claims 1 to 9, wherein the mixture obtained in said step b) is mixed for between 4 and 6 min, in particular for 5 min.

11. The process according to any one of claims 1 to 10, wherein step c) is performed for between 4 and 6 min, in particular for 5 min.

12. The process according to any one of claims 1 to 11, wherein said step c) is performed at 36°C.

13. Roasted coffee beans coated with shellac as coating material comprising an algae-based composition as defined in claims 7 to 9.

14. Coffee powder comprising at least in part particles consisting of a coffee component and shellac as coating component, wherein said shellac as coating component comprises an algae-based composition as defined in claims 7 to 9.

15. A method of generating a coffee comprising an algae-based composition as defined in claims 7 to 9, comprising the step of brewing coffee from a coffee powder according to claim 14.
